(19) Europäisches Patentamt
European Patent Office
Office européen des brevets

(11) **EP 4 131 626 A1**

(12) **EUROPEAN PATENT APPLICATION**
published in accordance with Art. 153(4) EPC

(43) Date of publication:
**08.02.2023 Bulletin 2023/06**

(21) Application number: **21776235.0**

(22) Date of filing: **15.03.2021**

(51) International Patent Classification (IPC):
*H01M 50/48* [(2021.01)]     *H01M 10/052* [(2010.01)]
*H01M 10/058* [(2010.01)]    *H01M 10/613* [(2014.01)]
*H01M 10/647* [(2014.01)]    *H01M 10/654* [(2014.01)]
*H01M 10/6595* [(2014.01)]   *H01M 50/403* [(2021.01)]
*H01M 50/486* [(2021.01)]

(52) Cooperative Patent Classification (CPC):
**H01M 10/052; H01M 10/058; H01M 10/613;**
**H01M 10/647; H01M 10/654; H01M 10/6595;**
**H01M 50/403; H01M 50/48; H01M 50/486;**
Y02E 60/10; Y02P 70/50

(86) International application number:
**PCT/JP2021/010443**

(87) International publication number:
**WO 2021/193205 (30.09.2021 Gazette 2021/39)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **27.03.2020 JP 2020059149**

(71) Applicant: **Mitsui Chemicals, Inc.**
**Tokyo 105-7122 (JP)**

(72) Inventors:
• **SUGIHARA, Yuri**
**Sodegaura-shi, Chiba 299-0265 (JP)**
• **MIZUNO, Yu**
**Sodegaura-shi, Chiba 299-0265 (JP)**

(74) Representative: **J A Kemp LLP**
**80 Turnmill Street**
**London EC1M 5QU (GB)**

(54) **SELF-EXTINGUISHABLE FILM FOR LITHIUM ION BATTERY, METHOD FOR PRODUCING SAME, AND LITHIUM ION BATTERY**

(57) A self-extinguishable film for a lithium-ion battery, comprising a self-extinguishing layer containing a heat-meltable binder and fire extinguishing agent particles.

FIG.1

**Description**

Technical Field

The present disclosure relates to a self-extinguishable film for a lithium-ion battery, a method of producing the same, and a lithium-ion battery.

Background Art

Lithium-ion batteries are used in a variety of applications, such as cellular phones, notebook PCs, electric vehicles, and large storage batteries for power supplies. From the viewpoint of need for longer power supply time and increased output, lithium-ion batteries are required to have higher capacity, higher energy density, and higher voltage.

In recent years, a variety of studies have been conducted on the safety of batteries represented by lithium-ion batteries, specifically on suppressing ignition and extinguishing fires of the above-described batteries.

For example, Patent Document 1 discloses a pouch-type secondary battery that includes an electrode assembly including a positive electrode, a negative electrode, and a separator interposed between the positive electrode and the negative electrode as a secondary battery pouch with improved safety that prevents a battery from igniting or, in the case of ignition, extinguishes the fire, even when the interior of the battery becomes hot due to non-normal operating conditions of the battery, wherein the above-described electrode assembly is stored in an internal pouch and electrode leads are drawn from the internal pouch, wherein the above-described internal pouch is stored in an external pouch and electrode leads are drawn from the external pouch, and wherein the space between the above-described internal pouch and external pouch contains a safety member.

Patent Document 2 discloses, as an electrochemical device capable of suppressing fires caused by lithium ignition in the initial stage of fire extinguishing, while ensuring miniaturization and weight reduction of the entire energy storage device, an electrochemical device including an electrode layered body composed of a negative electrode, a separator, and a positive electrode, a fire extinguishing agent that burns to generate an aerosol when reaching a predetermined temperature, an electrolyte solution containing a lithium ion-containing electrolyte and an organic solvent in which the above-described electrode layered body and the above-described fire extinguishing agent are immersed, and an outer packaging that contains the above-described electrode layered body, the above-described fire extinguishing agent, and the above-described electrolyte solution.

　　　Patent Document 1: Japanese National-Phase Publication (JP-A) No. 2018-514068
　　　Patent Document 2: Japanese Patent Publication (JP-B) No. 6431147

SUMMARY OF INVENTION

Technical Problem

However, there are cases in which there is a need to suppress combustion of lithium-ion battery elements at an earlier stage.

An object of the disclosure is to provide a self-extinguishable film for a lithium-ion battery that can inhibit combustion of lithium-ion battery elements at an early stage, a method of producing the same, and a lithium-ion battery including the above-described self-extinguishable film for a lithium-ion battery.

Solution to Problem

Means for solving the above-described problems encompass the following aspects.

　　　<1> A self-extinguishable film for a lithium-ion battery, comprising a self-extinguishing layer containing a heat-meltable binder and fire extinguishing agent particles.
　　　<2> The self-extinguishable film for a lithium-ion battery according to <1>, wherein the self-extinguishing layer contains heat-meltable binder particles, which are particles composed of the heat-meltable binder.
　　　<3> The self-extinguishable film for a lithium-ion battery according to <2>, wherein a number average particle size of the heat-meltable binder particles is from $0.1\ \mu m$ to $6.0\ \mu m$.
　　　<4> The self-extinguishable film for a lithium-ion battery according to <2> or <3>, wherein a number average particle size of the heat-meltable binder particles is from $0.2\ \mu m$ to $2.5\ \mu m$.
　　　<5> The self-extinguishable film for a lithium-ion battery according to any one of <2> to <4>, wherein the heat-meltable binder particles have an average degree of circularity of 0.80 or greater, as determined by the following

Formula (1):

$$\text{Average degree of circularity} = (\text{perimeter of circle of a same area as projected area of particle}/\text{perimeter of projected image of particle}) \ ... \ \text{Formula (1)}.$$

<6> The self-extinguishable film for a lithium-ion battery according to any one of <1> to <5>, wherein

the heat-meltable binder is a resin, and
the resin has a melt flow rate of from 20 g/10 min to 55 g/10 min, measured in accordance with JIS K7210-1995 and under conditions of a temperature of 190°C and a load of 21.18N.

<7> The self-extinguishable film for a lithium-ion battery according to any one of <1> to <6>, wherein the heat-meltable binder contains polyolefin.
<8> The self-extinguishable film for a lithium-ion battery according to any one of <1> to <7>, wherein a number average particle size of the fire extinguishing agent particles is from 0.1 $\mu$m to 5.0 $\mu$m.
<9> The self-extinguishable film for a lithium-ion battery according to any one of <1> to <8>, further comprising an adhesive layer.
<10> The self-extinguishable film for a lithium-ion battery according to any one of <1> to <8>, further comprising:

an adhesive layer arranged on one face side of the self-extinguishing layer; and
a flame-resistant layer arranged on another face side of the self-extinguishing layer.
<11> The self-extinguishable film for a lithium-ion battery according to any one of <1> to <10>, wherein when the self-extinguishable film is viewed in plan view, a number of aggregates of the fire extinguishing agent particles, in which the aggregates have a diameter of 0.5 mm or greater, is 10 or less per square area of 10 cm on a side.

<12> A method of producing the self-extinguishable film for a lithium-ion battery according to any one of <1> to <10>, the method comprising:

a process of preparing an aqueous dispersion A containing the heat-meltable binder and the fire extinguishing agent particles;
a process of applying the aqueous dispersion A on a base material to form a coating film; and
a process of heat-drying the coating film at a temperature below a melting point of the heat-meltable binder.

<13> The method of producing a self-extinguishable film for a lithium-ion battery according to <12>, wherein

the process of preparing the aqueous dispersion A comprises a process of mixing a water dispersion of heat-meltable binder particles, which are particles composed of the heat-meltable binder, and a water dispersion of the fire extinguishing agent particles, and
a pH of the water dispersion of the heat-meltable binder particles is from 8.0 to 11.0.

<14> A lithium-ion battery comprising:

a lithium-ion battery element including a positive electrode, a negative electrode, and a separator interposed between the positive electrode and the negative electrode; and
the self-extinguishable film for a lithium-ion battery according to any one of <1> to <11>.

<15> The lithium-ion battery according to <14>, wherein at least a part of the lithium-ion battery element and at least a part of the self-extinguishable film for a lithium -ion battery are bonded together.

Advantageous Effects of Invention

According to the disclosure, a self-extinguishable film for a lithium-ion battery that can inhibit combustion of lithium-ion battery elements at an early stage, a method of producing the same, and a lithium-ion battery including the above-described self-extinguishable film for a lithium-ion battery.

BRIEF DESCRIPTION OF DRAWINGS

Fig. 1 is a schematic cross-sectional view of one embodiment of the self-extinguishable film for a lithium-ion battery of the disclosure.

Fig. 2 is a partial cutaway perspective view of one embodiment of the lithium-ion battery of the disclosure.

Fig. 3 is a sectional view along line II-II of the lithium-ion battery illustrated in Fig. 2.

Fig. 4 is a graph showing results of a nail penetration test of a lithium-ion battery of Example 1.

Fig. 5 is a graph showing results of a nail penetration test of a lithium-ion battery of Comparative Example 1.

DESCRIPTION OF EMBODIMENTS

Herein, the numerical range expressed by using "from A to B" means a range including numerical values A and B as a lower limit value and an upper limit value.

Herein, the amount of each component in a composition means the total amount of the plurality of substances present in the composition, unless otherwise specified, when there is more than one substance corresponding to each component in the composition.

[Self-extinguishable film for Lithium-ion Battery]

The self-extinguishable film for a lithium-ion battery (hereinafter, also referred to as "self-extinguishable film") of the disclosure includes a self-extinguishing layer containing a heat-meltable binder and fire extinguishing agent particles.

The self-extinguishable film of the disclosure is used with a lithium-ion battery element. In this case, when abnormal heat generation occurs in the lithium-ion battery element, combustion of the lithium-ion battery element can be suppressed at an early stage.

Here, the concept that "combustion of the lithium-ion battery element can be suppressed at an early stage" includes both

that combustion of the lithium-ion battery can be prevented from occurring beforehand and that even when combustion of the lithium-ion battery element does actually occur, the fire can be extinguished at an early stage.

The reason that the above-described effect is exhibited is thought to be due to the fact that the self-extinguishing layer in the self-extinguishable film of the disclosure contains a heat-meltable binder together with fire extinguishing agent particles. Specifically, when abnormal heat generation occurs in a lithium-ion battery element and the temperature of the self-extinguishing layer reaches a certain level due to an action of this heat, the heat-meltable binder in the self-extinguishing layer melts, which is believed to release the fire extinguishing agent particles from the self-extinguishing layer. The released fire extinguishing agent particles are believed to have an effect of suppressing combustion of the lithium-ion battery element at an early stage.

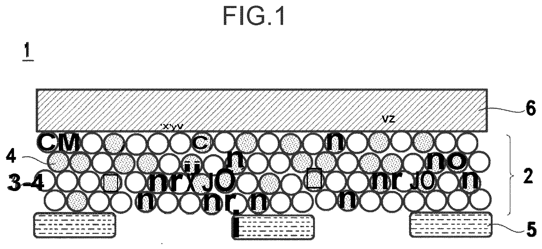

Fig. 1 is a schematic cross-sectional view of one embodiment of the self-extinguishable film for a lithium-ion battery of the disclosure.

As shown in Fig. 1, a self-extinguishable film 1 includes a self-extinguishing layer 2, an adhesive layer 5 arranged on one face side of the self-extinguishing layer 2, and a flame-resistant layer 6 arranged on another face side of the self-extinguishing layer 2. The adhesive layer and the flame-resistant layer are described below.

The self-extinguishing layer 2 contains heat-meltable binder particles 3, which are particles composed of a heat-meltable binder, and fire extinguishing agent particles 4.

The self-extinguishable film 1 is used, for example, in an aspect of covering at least a part of a lithium-ion battery element (for example, in an aspect of wrapping at least a part of a lithium-ion battery element).

The self-extinguishable film 1 includes the self-extinguishing layer 2 containing heat-meltable binder particles 3 and fire extinguishing agent particles 4, and therefore, when the film reaches a predetermined temperature due to abnormal heat generation in the lithium-ion battery element, the heat-meltable binder particles 3 melt to release the fire extinguishing agent particles 4.

Accordingly, combustion of the lithium-ion battery element can be suppressed before a battery outer packaging is damaged.

Since this embodiment is an embodiment in which a heat-meltable binder contained in a self-extinguishing layer is heat-meltable binder particles, an effect of suppressing combustion of a lithium-ion battery element at an early stage is more effectively exhibited for the reasons described below.

Hereinafter, each element that can be contained in the self-extinguishable film of the disclosure will be described.

< Self-extinguishing layer >

The self-extinguishable film of the disclosure includes a self-extinguishing layer.

The self-extinguishable film of the disclosure may include only one self-extinguishing layer or two or more layers of self-extinguishing layers.

(Heat-meltable binder)

A self-extinguishing layer contains at least one heat-meltable binder.

The heat-meltable binder contained in the self-extinguishing layer is preferably particles composed of a heat-meltable binder (hereinafter, also referred to as heat-meltable binder particles). In other words, it is preferable that the self-extinguishing layer contains heat-meltable binder particles, which are particles composed of a heat-meltable binder.

When the self-extinguishing layer contains heat-meltable binder particles, an effect of suppressing combustion of a lithium-ion battery element at an early stage is more effectively exhibited.

The reason for this is thought to be that when the self-extinguishing layer contains heat-meltable binder particles, the adhesive area between adjacent heat-meltable binder particles is small, which makes it easier for the adhesion between adjacent heat-meltable binder particles to be loosened when a lithium-ion battery element generates abnormal heat, which in turn makes it easier for fire extinguishing agent particles to be released from the self-extinguishing layer.

The number average particle size of heat-meltable binder particles is preferably from 0.1 μm to 6.0 μm.

When the number average particle size of heat-meltable binder particles is 0.1 μm or larger, the self-extinguishing layer is collapsible without too many adhesion points between heat-meltable binder particles, which makes it easier to release the extinguishing agent particles. The number average particle size of heat-meltable binder particles is more preferably 0.2 μm or more.

When the number average particle size of heat-meltable binder particles is 6.0 μm or less, the heat-meltable binder particles have sufficient adhesion points, which has an advantage that the self-extinguishing layer is less likely to crack and the flexibility of the self-extinguishing layer is more improved. For this reason, for example, it is easier to coat a lithium-ion battery element conforming to the shape of the battery element.

The number average particle size of heat-meltable binder particles is more preferably from 0.2 μm to 2.5 μm, and further more preferably from 0.2 μm to 1.0 μm.

When the number average particle size of heat-meltable binder particles is from 0.2 μm to 2.5 μm, an effect of suppressing combustion of a lithium-ion battery element at an early stage is more effectively exhibited.

The reason for this is thought to be that when the number average particle size of heat-meltable binder particles is 2.5 μm or less, the heat-meltable binder particles move more easily, and a phenomenon in which release of fire extinguishing agent particles is hindered by heat-meltable binder particles is suppressed, and fire extinguishing agent particles are more easily released.

Such an effect can be confirmed by checking the dispersibility (aggregation suppression) of fire extinguishing agent particles, as described below.

For heat-meltable binder particles, the half value width of the maximum peak of the number-based particle size distribution is preferably 0.6 μm or less.

It is thought that when the half value width of the maximum peak of the number-based particle size distribution is 0.6 μm or less, as compared to cases where the number-based particle size distribution of the heat-meltable binder particles is broad, entering of small heat-meltable binder particles into the gaps between large heat-meltable binder particles is suppressed, and therefore, the heat-meltable binder particles are sparsely packed, and adhesion points between heat-meltable binder particles are reduced, thereby suppressing degradation of collapsibility of a self-extinguishing layer.

The heat-meltable binder particles preferably have an average degree of circularity of 0.80 or greater, as determined by the following Formula (1). The above-described average degree of circularity is more preferably 0.90 or more.

$$\text{average degree of circularity} = (\text{perimeter of circle of the same area as projected area of particle/perimeter of projected image of particle}) \dots \text{Formula (1)}$$

The closer the shape of a heat-meltable binder particle is to a true sphere, the more adjacent heat-meltable binder particles become bonded to each other at a single point, which tends to improve the collapsibility of a self-extinguishing layer and release fire extinguishing agent particles all at once. The upper limit of the average degree of circularity is not particularly limited and may be 1, and a preferable upper limit from the viewpoint of production reasons is 0.99.

The number average particle size, the particle size distribution, and the average degree of circularity of heat-meltable binder particles can be measured by observing a fire extinguishing film with a scanning electron microscope (SEM), extracting the heat-meltable binder particles through image processing, and analyzing 5,000 heat-meltable binder particles.

True spherical heat-meltable binder particles can be prepared, for example, by the method described in Japanese Patent No. 2851880, and specifically by placing an aqueous dispersion containing polyolefin with carboxy groups and a basic substance such as potassium hydroxide in a pressure-resistant container, heating to melt the above-described polyolefin, and agitating at high speed.

In the above-described preparation method, the above-described basic substance surrounds the polyolefin particles to which carboxy groups have been introduced, preventing the polyolefin particles from aggregating with each other, resulting in spherical heat-meltable binder particles.

On the other hand, when there are fewer carboxy groups in the heat-meltable binder particles, influence on a battery reaction can be reduced, which is preferable.

Therefore, in the disclosure, it is preferable to use heat-meltable binder particles that have had carboxy groups on the surface removed by hot water washing.

From such a viewpoint, when water dispersion of heat-meltable binder particles is used as a raw material to form a self-extinguishing layer, the pH of the water dispersion of heat-meltable binder particles is preferably from 8.0 to 11.0.

When the pH of water dispersion of heat-meltable binder particles is within the above-described range, influence on a battery reaction can be further reduced.

The heat-meltable binder is preferably a resin.

A resin included in a heat-meltable binder preferably has a melt flow rate (hereinafter, also referred to as "MFR") of from 20 g/10 min to 55 g/10 min, measured in accordance with JIS K7210-1995 and under the conditions of a temperature of 190°C and a load of 21.18 N.

When the MFR of a resin included in a heat-meltable binder is 20 g/10 min or higher, the molten heat-meltable binder has better flowability, which accelerates collapse of a self-extinguishing layer due to abnormal heat generation and makes it easier to release fire extinguishing agent particles from the self-extinguishing layer, resulting in more effectively suppressing combustion of a lithium-ion battery element at an early stage.

The MFR of a resin included in a heat-meltable binder means a value measured in accordance with JIS K7210-1995 and under the conditions of a temperature of 190°C and a load of 21.18 N.

More specifically, MFR is measured by the A method (mass measurement method) in JIS K7210-1995, using a fixed die (an inner diameter of 2.095 mm and a length of 8 mm), under the conditions of a temperature of 190°C and a load of 21.18 N.

The melting point of a resin included in a heat-meltable binder is preferably from 100°C to 140°C, and more preferably from 110°C to 140°C.

When the melting point of a resin included in a heat-meltable binder is within the above-described range, fire extinguishing agent particles are more easily released from a self-extinguishing layer, resulting in more effectively suppressing combustion of a lithium-ion battery element at an early stage.

The heat-meltable binder preferably contains at least one polyolefin.

Examples of the polyolefin include a polyethylene, a polypropylene, an ethylene/propylene copolymer, an ethylene/1-butene copolymer, and a propylene/1-hexene copolymer.

The polyolefin preferably contains a carboxy group (for example, a maleic acid structure) at an end.

The content of a heat-meltable binder in a self-extinguishing layer depends on the type of fire extinguishing agent particles or the like, and is preferably from 10% by mass to 50% by mass, and more preferably from 20% by mass to 40% by mass relative to the total amount of the self-extinguishing layer.

(Fire Extinguishing Agent Particles)

The self-extinguishing layer contains at least one type of fire extinguishing agent particles.

The number average particle size of fire extinguishing agent particles depends on the particle size of heat-meltable binder particles, and is preferably from 0.1 $\mu$m to 5.0 $\mu$m, and more preferably from 0.2 $\mu$m to 2.5 $\mu$m.

In particular, when the number average particle size of fire extinguishing agent particles is from 0.8 times to 4 times larger than the number average particle size of the heat-meltable binder particles, coarsening of fire extinguishing agent particles due to aggregation is suppressed, fire extinguishing agent particles are uniformly dispersed between thermally molten binder particles, and the fire extinguishing agent particles can easily pass through the gaps between the thermally molten binder particles that have been loosened from their adhesion, and therefore fire extinguishing action tends to be exhibited at an early stage.

As fire extinguishing agent particles, fire extinguishing agents having particle form themselves or particles containing fire extinguishing agents can be used.

Examples of the fire extinguishing agent include

guanidine phosphate,
melamine polyphosphate, phosphoric trichloride, reaction products with 4,4'-isopropylidenediphenol and phenol,
a phosphate ester organophosphate compound,
phosphoric trichloride, polymer with 1,3-benzenediol,phenyl ester,
antimony trioxide,
ethylene bis(pentabromobenzene),
2,3-dibromopropyl ether,
triallyl isocyanate 6 bromide,
bis[3,5-dibromo-4-(2,3 (dibromopropoxy)phenyl] sulfone,
ethylene bis(pentabromobenzene)/antimony trioxide,
a potassium salt of perfluorobutane sulfonate,
silicon carbide,
spherical alumina,
specialty carbon fiber, and
titanium borate.

The fire extinguishing agent particles are preferably dispersed in a self-extinguishing layer. This makes it easier for the fire extinguishing agent particles to be released from the self-extinguishing layer, resulting in more effectively suppressing combustion of a lithium-ion battery element at an early stage.

Here, that the fire extinguishing agent particles are dispersed in the self-extinguishing layer means that aggregation of the fire extinguishing agent particles in the self-extinguishing layer is suppressed.

Preferable aspects include an aspect in which, when a self-extinguishable film is viewed in plan view, a number of aggregates of the fire extinguishing agent particles, in which the aggregates have a diameter of 0.5 mm or greater, is 10 or less (preferably 1 or less, and still more preferably 0) per square area of 10 cm on a side.

When the number average particle size of heat-meltable binder particles is from 0.2 $\mu$m to 2.5 $\mu$m, fire extinguishing agent particles are more easily dispersed in a self-extinguishing layer (or aggregation of fire extinguishing agent particles is more suppressed), and as a result, the fire extinguishing agent particles are more easily released from the self-extinguishing layer, which in turn more effectively exhibits the above-described effect.

The content of a heat-meltable binder in a self-extinguishing layer depends on the type of fire extinguishing agent particles or the like, and is preferably from 20% by mass to 70% by mass, more preferably from 30% by mass to 60% by mass, and still more preferably from 40% by mass to 50% by mass relative to the total amount of the self-extinguishing layer.

<Adhesive Layer>

The self-extinguishable film of the disclosure preferably further includes at least one adhesive layer.

This makes it easy to fix a self-extinguishable film and a lithium-ion battery element, and as a result, misalignment and miswinding of a lithium-ion battery element can be more effectively suppressed.

For example, the self-extinguishable film 1 shown in Fig. 1 includes an adhesive layer 5 on one face side of the self-extinguishing layer 2.

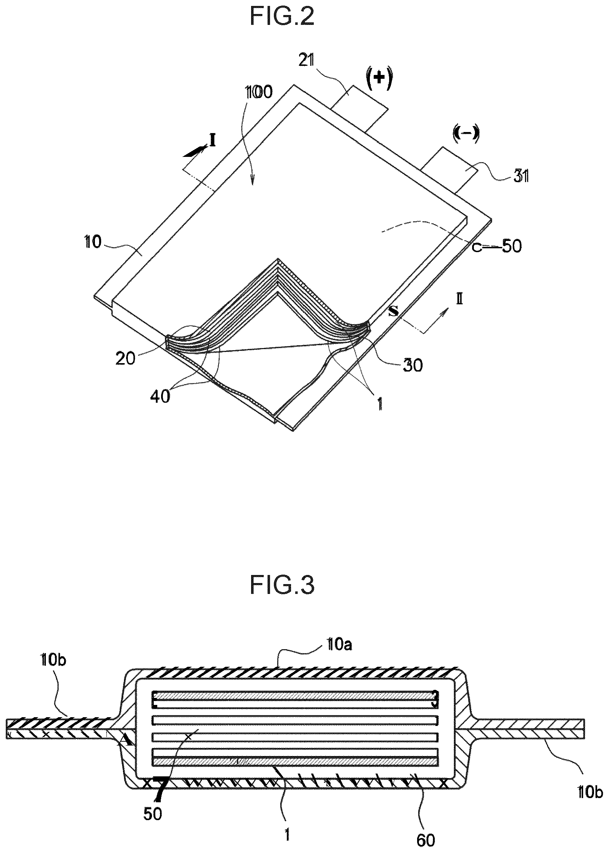

In this example, the adhesive layer 5 is bonded around a lithium-ion battery element 50 shown in Fig. 2, and at least part of the lithium-ion battery element 50 is directly covered with the self-extinguishable film 1, thereby firmly securing the lithium-ion battery element 50 and more effectively preventing the lithium-ion battery element 50 from misalignment or miswinding.

The adhesive layer 5 may be formed on the entire surface of the self-extinguishing layer 2, and is more preferably provided on a portion of the self-extinguishing layer 2 (in other words, provided in such a manner that a non-formed portion is present), such as in a polka dot pattern (dotted), in a stripe pattern (striped), or in a checkerboard pattern.

Formation of a non-applied portion of an adhesive tends to facilitate movement of fire extinguishing agent particles through the non-formed portion to a lithium-ion battery element.

It is preferable to use an adhesive that does not swell or dissolve in a non-aqueous electrolyte solution, and examples thereof include a non-silicone adhesive such as a urethane adhesive, an imide adhesive, an epoxy adhesive, or an acrylic adhesive.

< Flame-resistant Layer >

The self-extinguishable film of the disclosure is preferably further provided with at least one flame-resistant layer from the viewpoint of further suppressing spread of fire in lithium-ion batteries.

For example, the self-extinguishable film 1 shown in Fig. 1 is provided with a flame-resistant layer 6 on a face side opposite to a face side on which an adhesive layer is provided.

By including the flame-resistant layer 6, spread of fire outside a self-extinguishable film can be more effectively suppressed even when a lithium-ion battery element ignites.

Examples of a resin included in a flame-resistant layer include polyphenylene sulfide (PPS), polyetheretherketone (PEEK), polyamideimide (PAI), and polytetrafluoroethylene (PTFE).

These resins included in a flame-resistant layer may form a film that functions as a flame-resistant layer. These resins included in a flame-resistant layer may contain fire extinguishing agent particles. A flame-resistant layer may be formed with a film that introduces a PP (polypropylene) flame retardant (halogen-based, phosphate-based).

A preferable aspect of the self-extinguishable film of the disclosure is an aspect with an adhesive layer on one face side of a self-extinguishing layer and a flame-resistant layer on another face side of the self-extinguishing layer.

This is because the adhesive layer on one face side of the self-extinguishing layer and the flame-resistant layer on another face side of the self-extinguishing layer firmly fixes a lithium-ion battery and prevents misalignment or miswinding of a lithium-ion battery element, as well as realizing more effective suppression of spread of fire of the lithium-ion battery.

[Method of Producing Self-extinguishable film for Lithium-ion Battery]

One example of the method of producing a self-extinguishable film for a lithium-ion battery of the disclosure includes:

a process of preparing an aqueous dispersion A containing a heat-meltable binder and fire extinguishing agent particles;
a process of applying the aqueous dispersion A on a base material to form a coating film; and
a process of heat-drying the coating film at a temperature below the melting point of the heat-meltable binder.

In the production method according to the above-described example, the aqueous dispersion A containing a heat-meltable binder and fire extinguishing agent particles is applied to the base material, and then heat-dried to form a self-extinguishing layer.

In the production method according to the above-described example, a self-extinguishable film including a base material and a self-extinguishing layer provided on the base material is produced.

In the above-described example, when the self-extinguishing layer is peeled off from the base material, a self-extinguishable film consisting only of the self-extinguishing layer (freestanding film) can also be produced.

In the above-described example, after peeling the self-extinguishing layer from the base material, the base material and the self-extinguishing layer may be bonded together with an adhesive or the like to produce a self-extinguishable film with a base material and a self-extinguishing layer provided on the base material.

Examples of the base material include metal and the flame-resistant layer described above (for example, polyphenylene sulfide (PPS) film).

In the production method according to above-described example, the coating film is heat-dried at a temperature below the melting point of the heat-meltable binder in the process of heat-drying.

This makes it easy to maintain the shape of the heat-meltable binder (for example, the shape of the heat-meltable binder particles) in the formed self-extinguishing layer, as compared to cases where the coating film is heated above the melting point (mp) of the heat-meltable binder. Therefore, a self-extinguishing layer with excellent release of fire extinguishing agent particles can be formed.

In the production method according to above-described example, the lower limit of the temperature of heat-drying is not particularly limited, and from the viewpoint of the strength of the formed self-extinguishing layer (for example, crack suppression), the lower limit of the temperature of heat-drying is preferably from "mp - 50"(°C) to "mp - 30"(°C).

<Process of Preparing Aqueous Dispersion A>

A process of preparing an aqueous dispersion A is a process of preparing an aqueous dispersion A (hereinafter, also referred to as "self-extinguishing layer coating liquid") containing a heat-meltable binder and fire extinguishing agent particles.

The process of preparing an aqueous dispersion A preferably includes:

a process of mixing;
a water dispersion of particles composed of a heat-meltable binder (or heat-meltable binder particles); and
a water dispersion of fire extinguishing agent particles.

This can further improve the dispersibility of the fire extinguishing agent particles.
The aqueous dispersion A may contain an adhesive such as carboxymethyl cellulose (CMC) or an adhesion aid such as styrene butadiene rubber (SBR), if necessary.
As described above, the pH of the water dispersion of heat-meltable binder particles is preferably from 8.0 to 11.0.
In this case, the amount of carboxy groups on the surface of the heat-meltable binder particles is reduced, and therefore, an influence of the self-extinguishable film on a lithium-ion battery element can be further reduced.
The production method according to one example may include another process other than the above-described processes.
Examples of the other processes include a process of forming an adhesive layer as described above.

[Lithium-ion Battery]

The lithium-ion battery of the disclosure includes:

a lithium-ion battery element including a positive electrode, a negative electrode, and a separator interposed between the positive electrode and the negative electrode; and
the above-described self-extinguishable film of the disclosure.

Since the lithium-ion battery of the disclosure includes the self-extinguishable film of the disclosure, the same effect as the effect of the self-extinguishable film of the disclosure described above (or in other words, an effect of suppressing combustion of the lithium-ion battery element at an early stage) is exhibited.
In the lithium-ion battery of the disclosure, from the viewpoint of more effectively exhibiting the above-described effect, an aspect in which at least a part of the lithium-ion battery element is wrapped by a self-extinguishable film is preferable.
Fig. 2 is a partial cutaway perspective view of one embodiment of the lithium-ion battery of the disclosure.
As shown in Fig. 2, the lithium-ion battery 100 is formed by housing a lithium-ion battery element 50, around which a self-extinguishable film 1 is wrapped, in a battery outer packaging 10. The lithium-ion battery element 50 is formed by layering or winding a positive electrode 20, a negative electrode 30, and a separator 40, and is housed in a housing portion 10a by being sealed in a state in which the positive electrode terminal 21 and the negative electrode terminal 31 are pulled out from an edge portion of the battery outer packaging 10.
In the lithium-ion battery of the disclosure, at least a part of the lithium-ion battery element and at least a part of the self-extinguishable film are bonded together from the viewpoint of further reducing misalignment of the lithium-ion battery element.
Fig. 3 is a sectional view along II-II line of the lithium-ion battery shown in Fig. 2.
As shown in Fig. 3, in this embodiment, to the lithium-ion battery element 50, a self-extinguishable film 1 that wraps around the lithium-ion battery element 50 is bonded, thereby preventing misalignment of the lithium-ion battery element 50.
In Fig. 3, the lithium-ion battery element 50, around which a self-extinguishable film 1 is wrapped, is arranged within the housing portion 10a of the battery outer packaging 10, an electrolyte solution 60 is filled into the housing portion 10a, and the lithium-ion battery element 50 is sealed and housed within the battery outer packaging 10 by a sealing portion 10b formed by heat-sealing edge portions of the battery outer packaging 10.
A positive electrode usually includes a positive electrode active material and a positive electrode current collector, and may also include a conductive aid, a binder, a solid electrolyte, and the like, as necessary. The positive electrode active material is not particularly limited, and a generally known material can be used.
Examples of the positive electrode active material include a lithium-containing composite oxide such as lithium cobaltate, lithium nickelate, lithium manganate, a spinel-type lithium composite oxide, and lithium titanate.
A negative electrode is usually composed of a negative electrode active material and a negative electrode current collector, and may contain a conductive aid, a binder, a solid electrolyte, and the like, as necessary. The negative electrode active material is not particularly limited, and a generally known material can be used.
Examples thereof include a carbon material such as graphite or hard carbon, Si, and an Si alloy.
The electrolyte is not particularly limited as long as the electrolyte has lithium ion conductivity, and a generally known material can be used, and a non-aqueous electrolyte solution and an inorganic solid electrolyte can be used.
Examples of the non-aqueous electrolyte solution include a non-aqueous electrolyte solution in which a Li electrolyte such as $LiPF_6$, $LiBF_4$, $LiN(SO_2CF_3)_2$, or $LiN(SO_2CF_2CF_3)_2$ is dissolved in a mixture of solvents of a carbonate such as ethylene carbonate, propylene carbonate, dimethyl carbonate, or ethyl methyl carbonate.

Examples of the inorganic solid electrolyte include an oxide solid electrolyte such as a perovskite-type oxide solid electrolyte such as $(Li,La)TiO_3$ or a NASICON-type oxide solid electrolyte such as $Li(Al,Ti)(PO_4)_3$ and a sulfide solid electrolyte such as $Li_2S-P_2S_5$, $Li_2S-SiS_2$, $LiI-Li_2S-SiS_2$, $LiI-Si_2S-P_2S_5$, $LiI-Li_2S-P_2O_5$, or $LiI-Li_3PO_4-P_2S_5$.

A separator is provided in between a positive electrode and a negative electrode to insulate the positive electrode and the negative electrode.

As the above-described separator, a material that is stable to a non-aqueous electrolyte solution and has excellent liquid retention properties is preferably used, and for example, a polyolefin porous film containing polyethylene, polypropylene, or the like; a nonwoven fabric containing a polyolefin fiber (a polyethylene fiber, a polypropylene fiber, or the like), a glass fiber, a cellulose fiber, a polyimide fiber, or the like; or the like can be used.

EXAMPLES

Hereinafter, Examples of the disclosure will be described, but the disclosure is not limited to the following Examples.

[Example 1]

< Preparation of Self-extinguishable film >

To an aqueous solution containing from 1% by mass to 5% by mass of carboxymethylcellulose to achieve a content of 15% by mass in a self-extinguishing layer, fire extinguishing agent particles (phosphoric trichloride, polymer with 1,3-benzenediol, phenyl ester, a number average particle size of 0.8 $\mu$m) was added to achieve a content of 45% by mass in the self-extinguishing layer and dispersed uniformly using a planetary mixer, and styrene-butadiene rubber (number average particle size: 1.2 $\mu$m, manufactured by ZEON Corporation, 2001) was added to achieve a content of 10% by mass in the self-extinguishing layer to prepare a fire extinguishing agent particle water dispersion.

To the prepared fire extinguishing agent particle water dispersion, a water dispersion of heat-meltable binder particles 1 (number average particle size: 1.0 $\mu$m, average degree of circularity: 0.91, pH: 9, melting point: 110°C, MFR: 25 g/10 min; CHEMIPEARL W401 manufactured by Mitsui Chemicals, Inc.) was added in such a manner that the content of heat-meltable binder particles 1 in the self-extinguishing layer was 30% by mass, and uniformly dispersed to prepare a self-extinguishing layer coating liquid (corresponding to aqueous dispersion A described above).

The self-extinguishing layer coating liquid was applied on a polyphenylene sulfide (PPS) film as a flame-resistant layer and heat-dried at 120°C to form a self-extinguishing layer with a thickness of 50 $\mu$m.

On the self-extinguishing layer, a methyl methacrylate adhesive was applied in the form of dots to form an adhesive layer to obtain a self-extinguishable film.

< Preparation of Lithium-ion Battery >

A slurry for a negative electrode was prepared by mixing 95 parts by mass of graphite as a negative electrode active material, 1 part by mass of styrene butadiene rubber (SBR) as a binder, 1 part by mass of carboxymethyl cellulose (CMC) as a thickening agent, and 100 parts by mass of water as a solvent.

Next, a 10 $\mu$m thick copper foil (porous foil) was used as a negative electrode collector, and a slurry for a negative electrode was coated onto the negative electrode collector in such a manner that the mass of graphite after drying was 4 mg/cm$^2$, and dried to prepare a negative electrode.

A slurry for a positive electrode was prepared by mixing 90 parts by mass of powdered activated carbon as a positive electrode active material, 6 parts by mass of polyacrylic acid (sodium neutralized salt of polyacrylic acid) as a binder, 15 parts by mass of acetylene black as a conductive aid, and 345 parts by mass of water as a solvent.

Next, an aluminum foil (porous foil) with a thickness of 15 $\mu$m was used as a positive electrode collector, and a slurry for a positive electrode was coated onto the positive electrode collector in such a manner that the mass of activated carbon after drying was 4 mg/cm$^2$, and dried to prepare a positive electrode.

The positive electrode and the negative electrode prepared as described above were each punched out to form a rectangle of 60 mm $\times$ 40 mm in size, and, while leaving a 40 mm $\times$ 40 mm slurry coating film, the slurry coating film was stripped off from a 20 mm $\times$ 40 mm area on one end of the long side to attach an electrode terminal. And then, the electrode terminal was attached to the area.

A lithium-ion battery element was prepared by placing a cellulose separator with a thickness of 20 $\mu$m in between the positive electrode and the negative electrode, with the coated film portions of the positive electrode and the negative electrode facing each other.

The entire lithium-ion battery element, except for one end where the electrode terminal was attached and the other end opposite to the one end, was wrapped with self-extinguishable film to fix the positive electrode, the separator, and the negative electrode.

A mixed solvent of 35% by volume of ethylene carbonate (EC), 35% by volume of dimethyl carbonate (DMC), and 30% by volume of ethyl methyl carbonate (EMC) was used as a solvent, and 1 mol/L of $LiPF_6$ was added to this mixed solvent to prepare a non-aqueous electrolyte solution.

Aluminum foil with a thickness of 40 $\mu$m was subjected to a chemical conversion treatment on both sides, a stretched nylon film with a thickness of 25 $\mu$m was bonded to one side of the chemical conversion treated surface using a two-component polyurethane adhesive by the dry lamination method, and a polypropylene film (molecular weight: 5 million) with a thickness of 50 $\mu$m was further bonded to this nylon film in the same manner to obtain a film for a battery outer packaging.

A lithium-ion battery element wrapped in a self-extinguishable film and a metal lithium foil for lithium pre-dope were housed in a battery outer packaging obtained by heat sealing three sides of the film for the battery outer packaging, the above-described non-aqueous electrolyte solution was injected therein, and the opening of the battery outer packaging was sealed by thermal bonding at 150°C, thereby preparing a lithium-ion battery.

[Comparative Example 1]

A lithium-ion battery was prepared in the same manner as in Example 1, except that the lithium-ion battery element was not wrapped with a self-extinguishable film.

< Confirmation of Dispersibility of Fire Extinguishing Agent Particles in Self-extinguishing layer >

For a self-extinguishable film in each example, the dispersibility of fire extinguishing agent particles in a self-extinguishing layer was examined as follows.

The self-extinguishable film was observed in plan view to determine the number of aggregates of fire extinguishing agent particles, in which the aggregates have a diameter of 0.5 mm or greater. The number of the aggregates was calculated as the number of the aggregates per square area of 10 cm on each side of the self-extinguishable film.

Based on results obtained, the dispersibility of the fire extinguishing agent particles in the self-extinguishing layer was evaluated according to the following evaluation criteria.

The results are shown in the "Dispersibility of Fire Extinguishing Agent Particles" column of Table 1.

In the evaluation criteria below, the rank with the best dispersibility of the fire extinguishing agent particles in the self-extinguishing layer is "A".

- Evaluation Criteria for Dispersibility of Fire Extinguishing Agent Particles in Self-extinguishing layer -

A: The number of aggregates of fire extinguishing agent particles, in which the aggregates have a diameter of 0.5 mm or greater, when converted to the number of the aggregates per square area of 10 cm on each side was 0.

B: The number of aggregates of fire extinguishing agent particles, in which the aggregates have a diameter of 0.5 mm or greater, when converted to the number of the aggregates per square area of 10 cm on each side was 1 to 10.

C: The number of aggregates of fire extinguishing agent particles, in which the aggregates have a diameter of 0.5 mm or greater, when converted to the number of the aggregates per square area of 10 cm on each side was more than 10.

< Safety Evaluation >

The prepared lithium-ion battery was subjected to a forced internal short-circuit test (nail penetration test) using a nail with an outer diameter of 5 mm and a square-headed tip, and the temperature and voltage on the surface and inside (5 mm from the tip of the nail) of the lithium-ion battery were measured.

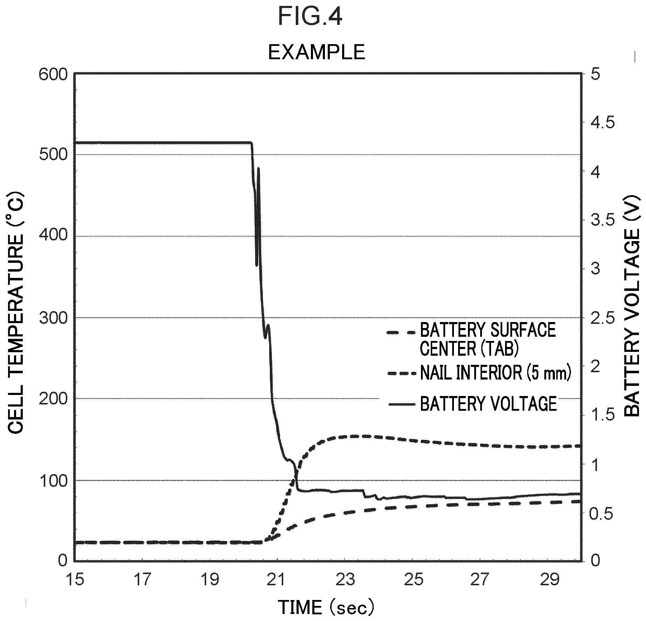

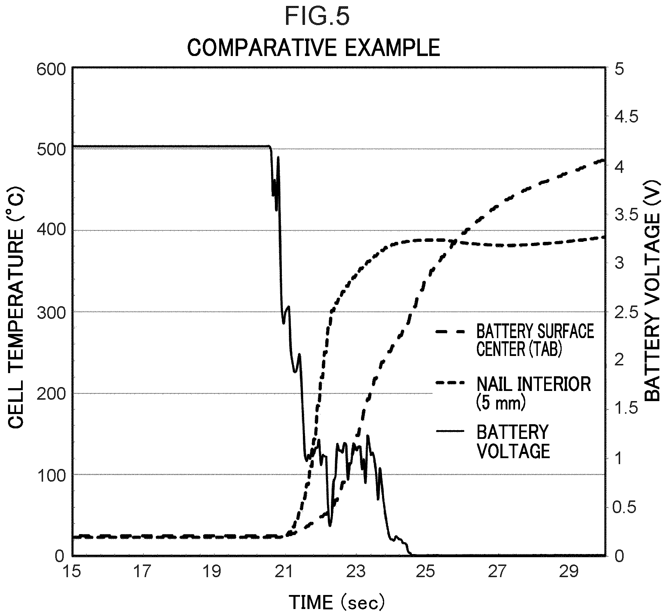

The evaluation results are shown in Fig. 4 and Fig. 5.

The "BATTERY SURFACE CENTER (TAB)" indicates the temperature on the surface of a lithium-ion battery, and the "NAIL INTERIOR (5 mm)" indicates the temperature inside a lithium-ion battery.

From the graphs in Fig. 4 and Fig. 5, it was confirmed that the lithium-ion battery of Example 1, in which the lithium-ion battery element is wrapped with a self-extinguishable film, can suppress the temperature rise inside the lithium-ion battery and prevent ignition more effectively than the lithium-ion battery of Comparative Example 1.

A lithium-ion battery was prepared in the same way as in Example 1 except that the heat-meltable binder particles 1 were changed to heat-meltable binder particles shown in Table 1 below, and a forced internal short-circuit test was conducted.

The dispersibility of the fire extinguishing agent particles in the self-extinguishing layer and the maximum temperature reached inside the lithium-ion battery by the forced internal short-circuit test are shown in Table 1 together with the maximum temperature reached inside the lithium-ion battery.

[Table 1]

| | Number average particle size ($\mu$m) | pH | Melting point (°C) | MFR (g/min) | Average degree of circularity | Dispersibility of fire extinguishing agent particles | Nail penetration test temperature in the cell (°C) | Difference between temperature in the cell and melting point (°C) |
|---|---|---|---|---|---|---|---|---|
| Heat-meltable binder particles 2 | 0.2 | 9 | 110 | 25 | 0.85 | A | 132 | 22 |
| Heat-meltable binder particles 3 | 0.6 | 11 | 110 | 25 | 0.91 | A | 130 | 20 |
| Heat-meltable binder particles 4 | 1.0 | 9 | 118 | 55 | 0.99 | A | 134 | 16 |
| Heat-meltable binder particles 5 | 2.5 | 9 | 113 | 45 | 0.89 | A | 145 | 32 |
| Heat-meltable binder particles 6 | 3.0 | 9 | 132 | 18 | 0.78 | B | 190 | 58 |
| Heat-meltable binder particles 7 | 4.0 | 9 | 128 | 15 | 0.84 | B | 204 | 76 |
| Heat-meltable binder particles 8 | 6.0 | 8 | 132 | 18 | 0.84 | B | 197 | 65 |

Table 1 shows that the self-extinguishable film of the disclosure can lower the temperature inside the lithium-ion battery to lower than the 390°C of Comparative Example 1, and can prevent ignition.

When the number average particle size of the heat-meltable binder particles is from 0.2 $\mu$m to 2.5 $\mu$m, the temperature inside the lithium-ion battery is found to be lower than the decomposition temperature of the electrolyte solution (approximately 180°C). This is thought to be due to a high release of the fire extinguishing agent particles and exhibition of fire extinguishing action at an early stage.

In particular, it was confirmed that, when the number average particle size of the heat-meltable binder particles was 1.0 μm or less and the number average particle size of the fire extinguishing agent particles and the number average particle size of the heat-meltable binder particles were about the same (from 0.8 to 4 times), the difference between the temperature in the cell and the melting point was smaller, and that therefore the fire extinguishing agent particles were released at an early stage and the fire extinguishing effect was exhibited.

The disclosure of Japanese Patent Application No. 2020-059149, filed on March 27, 2021, is hereby incorporated by reference in its entirety.

All Documents, Patent Applications, and technical standards described herein are incorporated by reference herein to the same extent as if each of the Documents, Patent Applications, and technical standards had been specifically and individually indicated to be incorporated by reference.

**Claims**

1. A self-extinguishable film for a lithium-ion battery, comprising a self-extinguishing layer containing a heat-meltable binder and fire extinguishing agent particles.

2. The self-extinguishable film for a lithium-ion battery according to claim 1, wherein the self-extinguishing layer contains heat-meltable binder particles, which are particles composed of the heat-meltable binder.

3. The self-extinguishable film for a lithium-ion battery according to claim 2, wherein a number average particle size of the heat-meltable binder particles is from 0.1 μm to 6.0 μm.

4. The self-extinguishable film for a lithium-ion battery according to claim 2 or 3, wherein a number average particle size of the heat-meltable binder particles is from 0.2 μm to 2.5 μm.

5. The self-extinguishable film for a lithium-ion battery according to any one of claims 2 to 4, wherein the heat-meltable binder particles have an average degree of circularity of 0.80 or greater, as determined by the following Formula (1):

$$\text{Average degree of circularity} = (\text{perimeter of circle of a same area as projected area of particle}/\text{perimeter of projected image of particle}) \dots \text{Formula (1)}.$$

6. The self-extinguishable film for a lithium-ion battery according to any one of claims 1 to 5, wherein:

   the heat-meltable binder is a resin, and
   the resin has a melt flow rate of from 20 g/10 min to 55 g/10 min, measured in accordance with JIS K7210-1995 and under conditions of a temperature of 190°C and a load of 21.18N.

7. The self-extinguishable film for a lithium-ion battery according to any one of claims 1 to 6, wherein the heat-meltable binder contains polyolefin.

8. The self-extinguishable film for a lithium-ion battery according to any one of claims 1 to 7, wherein a number average particle size of the fire extinguishing agent particles is from 0.1 μm to 5.0 μm.

9. The self-extinguishable film for a lithium-ion battery according to any one of claims 1 to 8, further comprising an adhesive layer.

10. The self-extinguishable film for a lithium-ion battery according to any one of claims 1 to 8, further comprising:

    an adhesive layer arranged on one face side of the self-extinguishing layer; and
    a flame-resistant layer arranged on another face side of the self-extinguishing layer.

11. The self-extinguishable film for a lithium-ion battery according to any one of claims 1 to 10, wherein, when the self-extinguishable film is viewed in plan view, a number of aggregates of the fire extinguishing agent particles, in which the aggregates have a diameter of 0.5 mm or greater, is 10 or less per square area of 10 cm on a side.

12. A method of producing the self-extinguishable film for a lithium-ion battery according to any one of claims 1 to 11, the method comprising:

a process of preparing an aqueous dispersion A containing the heat-meltable binder and the fire extinguishing agent particles;
a process of applying the aqueous dispersion A on a base material to form a coating film; and
a process of heat-drying the coating film at a temperature below a melting point of the heat-meltable binder.

13. The method of producing a self-extinguishable film for a lithium-ion battery according to claim 12, wherein:

the process of preparing the aqueous dispersion A comprises a process of mixing a water dispersion of heat-meltable binder particles, which are particles composed of the heat-meltable binder, and a water dispersion of the fire extinguishing agent particles, and
a pH of the water dispersion of the heat-meltable binder particles is from 8.0 to 11.0.

14. A lithium-ion battery comprising:

a lithium-ion battery element including a positive electrode, a negative electrode, and a separator interposed between the positive electrode and the negative electrode; and
the self-extinguishable film for a lithium-ion battery according to any one of claims 1 to 11.

15. The lithium-ion battery according to claim 14, wherein at least a part of the lithium-ion battery element and at least a part of the self-extinguishable film for a lithium-ion battery are bonded together.

FIG.1

FIG.2

FIG.3

# FIG.4

## EXAMPLE

## FIG.5
## COMPARATIVE EXAMPLE

<table>
<tr><td colspan="2">**INTERNATIONAL SEARCH REPORT**</td><td colspan="2">International application No.<br>PCT/JP2021/010443</td></tr>
</table>

**A. CLASSIFICATION OF SUBJECT MATTER**
H01M 50/48(2021.01)i; H01M 10/052(2010.01)i; H01M 10/058(2010.01)i; H01M
10/613(2014.01)i; H01M 10/647(2014.01)i; H01M 10/654(2014.01)i; H01M
10/6595(2014.01)i; H01M 50/403(2021.01)i; H01M 50/486(2021.01)i
FI: H01M50/48; H01M10/052; H01M10/058; H01M10/613; H01M10/647;
H01M10/654; H01M10/6595; H01M50/403 D; H01M50/486

According to International Patent Classification (IPC) or to both national classification and IPC

**B. FIELDS SEARCHED**

Minimum documentation searched (classification system followed by classification symbols)
H01M50/48; H01M10/052; H01M10/058; H01M10/613; H01M10/647; H01M10/654;
H01M10/6595; H01M50/403; H01M50/486

Documentation searched other than minimum documentation to the extent that such documents are included in the fields searched
| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2014-7089 A (HITACHI MAXELL, LTD.) 16 January 2014 (2014-01-16) paragraphs [0014], [0024], [0035], [0038], [0041], [0066], examples | 1, 6-8, 12, 14-15 |
| A | JP 2009-218078 A (NISSAN MOTOR CO., LTD.) 24 September 2009 (2009-09-24) | 1-15 |
| A | US 2019/0267685 A1 (LG CHEM, LTD.) 29 August 2019 (2019-08-29) | 1-15 |
| A | US 2018/0331386 A1 (HYUNDAI MOTOR COMPANY) 15 November 2018 (2018-11-15) | 1-15 |
| P, A | WO 2020/203685 A1 (MITSUI CHEMICALS, INC.) 08 October 2020 (2020-10-08) | 1-15 |

☐ Further documents are listed in the continuation of Box C.   ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 03 June 2021 (03.06.2021) | 15 June 2021 (15.06.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

| International application No. |
|---|
| PCT/JP2021/010443 |

| Patent Documents referred in the Report | Publication Date | Patent Family | Publication Date |
|---|---|---|---|
| JP 2014-7089 A | 16 Jan. 2014 | (Family: none) | |
| JP 2009-218078 A | 24 Sep. 2009 | (Family: none) | |
| US 2019/0267685 A1 | 29 Aug. 2019 | WO 2018/080257 A1 EP 3442051 A1 CN 109155390 A KR 10-2018-0047360 A | |
| US 2018/0331386 A1 | 15 Nov. 2018 | KR 10-2018-0124261 A | |
| WO 2020/203685 A1 | 08 Oct. 2020 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018514068 A
- JP 6431147 B
- JP 2851880 B
- JP 2020059149 A